# EUROPÄISCHE PATENTSCHRIFT

(11) **EP 3 171 467 B1**
(45) Veröffentlichungstag und Bekanntmachung des Hinweises auf die Patenterteilung: **20.05.2020**
(21) Anmeldenummer: 16197709.5
(22) Anmeldetag: 08.11.2016
(51) Int. Cl.: H02B 1/14, H02B 1/30, H02B 1/20, H02B 1/03

(54) **SCHRANK**
CABINET
ARMOIRE

(30) Priorität: 23.11.2015 DE 102015120261
(43) Veröffentlichungstag der Anmeldung: 24.05.2017
(73) Patentinhaber: ABB Schweiz AG, 5400 Baden (CH)
(72) Erfinder: Roth, Michael, 77880 Sasbach (DE)
(74) Vertreter: Marks, Frank

(56) Entgegenhaltungen:
- EP-A1- 1 744 422
- DE-A1- 2 745 426

## Beschreibung

Die Erfindung betrifft einen Schrank, insbesondere eine Schalt-, Zähler- oder Verteilerschrank, umfassend ein Schrankgehäuse mit mindestens einer Seitenwand, in welche eine Wandöffnung zur Durchführung von Stromschienen oder Leitungen einbringbar oder eingebracht ist, gemäß dem Oberbegriff von Anspruch 1 . Schränke, insbesondere Zähler- und/ oder Verteilerschränke, mit einem Schrankgehäuse aus Blech und einer Innenauskleidung des Schrankgehäuses aus isolierendem Material sind bereits bekannt. Schränke mit Seitenwänden aus Blech benötigen eine isolierende Innenauskleidung, damit keine spannungsführenden Teile mit einer elektrisch leitenden Seitenwand in Berührung kommen.

Sobald eine Wandöffnung zur Durchführung von Stromschienen, nämlich insbesondere Kupferschienen, oder Leitungen in die Seitenwand eingebracht oder genutzt wird, wird derzeit zur Bildung einer zu dieser korrespondierenden Öffnung aus der Innenauskleidung ein Auskleidungsabschnitt herausgeschnitten.

Vor diesem Hintergrund legt die DIN 43 870 Teil 1 die Maße für einen Zählerplatz und dessen Umhüllung fest. Bei Einhaltung der in der Norm vorgegebenen Maße ist es kaum möglich, einen ausreichenden Arbeitsbereich zwischen Einbaufeldern und einer isolierenden Innenauskleidung zu schaffen.

Dies ist vor allem beim Verbinden von zwei Schränken sowie bei der Durchführung von Stromschienen und deren Verbindung hinderlich. Das Arbeiten an den Schränken ist folglich erschwert.

Die EP 1 744 422 A1 zeigt einen Zähler- oder/und Verteilerschrank mit einem Schrankgehäuse aus Blech und einer Innenauskleidung aus isolierendem Material, wobei das Schrankgehäuse eine Öffnung für die Durchführung von Leitern aufweist, welche durch eine Platte verschließbar ist, wobei die Oberfläche der Platte auf der Innenseite durch ein isolierendes Material gebildet ist.

Der Erfindung liegt daher die Aufgabe zugrunde, einen Schrank, insbesondere einen Schalt- und/oder Zähler- und/ oder Verteilerschrank, derart auszugestalten und weiter zu bilden, dass in diesem ein Montageraum, insbesondere zur Durchführung von Stromschienen und Leitungen, vergrößert werden kann.

Erfindungsgemäß wird die voranstehende Aufgabe durch einen Schrank mit den Merkmalen des Patentanspruchs 1 gelöst.

Erfindungsgemäß weist bei dem Schrank, insbesondere einem Zähler- und/ oder Verteiler- und/oder Schaltschrank, die isolierende Innenauskleidung einen vordefinierten oder vorgeformten Auskleidungsabschnitt auf, wobei der Auskleidungsabschnitt reversibel entnehmbar ist. Der Auskleidungsabschnitt gibt nach seiner Entnahme einen Arbeitsbereich oder Freiraum frei, der zur Bedienerseite hin geöffnet ist. So wird Raum zwischen Einbaufeldern und der isolierenden Innenauskleidung geschaffen. Der geschaffene Raum vergrößert einen Montageraum zur Durchführung von Stromschienen und Leitungen, so dass insbesondere das Arbeiten beim Anbringen von Klemmen oder Verbindungsvorrichtungen für Stromschienen erleichtert wird. In der Innenauskleidung ist ein zum Wandabschnitt oder zur Wandöffnung korrespondierender Freiraum ausgebildet, welcher durch den Auskleidungsabschnitt verdeckbar ist oder durch Entfernung des Auskleidungsabschnitts freigebbar oder erzeugbar ist. Hierdurch weist die Innenauskleidung einen zum vorgeprägten Wandabschnitt im Wesentlichen deckungsgleichen vordefinierten Freiraum auf, welcher durch einen isolierenden Deckel von innen verschließbar ist.

Der entstandene Freiraum kann nach vollzogener Durchführung der Stromschienen oder Leitungen mit einem isolierenden Teil wieder verschlossen werden.

Weiter vorteilhaft ist der Auskleidungsabschnitt als entnehmbarer und zumindest teilweise wieder einsetzbarer Deckel ausgebildet. Ein Deckel kann als separates Teil einfach aus der Innenauskleidung herausgezogen werden, ohne Schneidwerkzeuge verwenden zu müssen. Da der isolierende Deckel herausziehbar ist, kann der Bereich zwischen Einbauten und seitlich isolierender Innenauskleidung problemlos vergrößert werden.

Vorteilhaft weist der entnehmbare Auskleidungsabschnitt bzw. der isolierende Deckel eine Sollbruchstelle auf. So kann nach vollzogener Durchführung der Stromschienen oder Leitungen ein isolierender Deckel an der Sollbruchstelle über seine Länge hinweg abgebrochen werden. Hierdurch entsteht ein Reststück des Deckels bzw. des Auskleidungsabschnitts, das einen vorderen Bereich zu Einbaufeldern hin verschließen kann, wobei ein hinterer Bereich zur Durchführung von Stromschienen oder Leitungen geöffnet bleibt.

Vorteilhaft ist der Wandabschnitt in der Seitenwand von Vorprägungen umgeben oder vorgeprägt. Hierdurch weist das Schrankgehäuse in einer Seitenwand einen vorgeprägten Wandabschnitt für die Durchführung von Stromschienen und Leitungen auf, welcher mit Werkzeugen ausgeschlagen werden kann.

Bevorzugt ist die Öffnung in der isolierenden Innenauskleidung zu den Vorprägungen der Seitenwand hin ausgerichtet und zumindest teilweise bereits offen, so dass die isolierende Innenauskleidung nicht mehr aufwendig ausgeschnitten werden muss. Durch den isolierenden Deckel kann dieser Bereich bzw. diese Öffnung sicher verschlossen werden.

Vor diesem Hintergrund ist denkbar, dass der Auskleidungsabschnitt, insbesondere bei einer Ausgestaltung als herausziehbarer Deckel, aus einem anderen Material gefertigt ist als die Innenauskleidung.

Vorteilhaft ist der Seitenwand ein Dom oder ein anderes Formschlussmittel zugeordnet, welcher bzw. welches durch den Auskleidungsabschnitt verdeckt oder verdeckbar ist. Schrauben und/ oder Muttern können in einen oder mit einem unter einem isolierenden Deckel liegenden, dort ausgeformten Dom verschraubt werden. Dies ermöglicht das einfache Verbinden von zwei nebeneinander stehenden oder hängenden Schränken. Die Schrankverbindung wird dann mit dem hier beschriebenen Deckel oder Auskleidungsabschnitt abgedeckt und schutzisoliert.

In der Zeichnung zeigen
- Fig. 1: einen Zähler-und/ oder Verteilerschrank ohne Einbaufelder in einer perspektivischen Ansicht schräg von vorne,
- Fig. 2: einen Zähler-und/ oder Verteilerschrank ohne Einbaufelder in einer perspektivischen Ansicht schräg von vorne mit abgezogenem isolierendem Deckel,
- Fig. 3: einen isolierenden Deckel in perspektivischer Ansicht von vorne,
- Fig. 4: einen isolierenden Deckel in perspektivischer Ansicht von hinten mit senkrecht verlaufender Sollbruchstelle,
- Fig. 5: einen Zähler- und/ oder Verteilerschrank mit Einbaufeldern und eingebautem Deckel in einer perspektivischen Ansicht schräg von vorne,
- Fig. 6: einen Zähler- und/ oder Verteilerschrank mit Einbaufeldern und sich im Abziehen befindendem, isolierendem Deckel in einer perspektivischen Ansicht schräg von vorn, wobei dargestellt ist, wie ein Zwischenraum zwischen Einbaufeldern und seitlicher isolierender Innenauskleidung durch das Entfernen des isolierenden Deckels größer wird,
- Fig. 7: einen Zähler- und/ oder Verteilerschrank mit Einbaufeldern und eingebautem Sammelschienenverbinder in einer perspektivischen Ansicht schräg von vorn, wobei der entfernte Deckel einen frei zugänglichen Raum schafft, um den Sammelschienenverbinder einsetzen und anschließen zu können,
- Fig. 8: einen Zähler-und/ oder Verteilerschrank mit Einbaufeldern und eingebautem Sammelschienenverbinder in einer perspektivischen Ansicht schräg von vorne, wobei der isolierende Deckel an der Sollbruchstelle getrennt und als Reststück wieder eingebaut wurde und wobei das Reststück einen Berührungsschutz zwischen Einbaufeldern und der isolierenden Innenauskleidung wieder herstellt,
- Fig. 9: einen Zähler- und/ oder Verteilerschrank mit Einbaufeldern und eingebautem Sammelschienenverbinder in einer perspektivischen Ansicht schräg von vorne, wobei der isolierende Deckel an der Sollbruchstelle getrennt und als Reststück wieder eingebaut wurde, wobei das Reststück einen Berührungsschutz zwischen Einbaufeldern und der isolierenden Innenauskleidung wieder herstellt, wobei eine eingebaute Feldabdeckung vorgesehen ist und wobei alle Bereiche sicher verschlossen sind und die geforderte Schutzart erfüllen,
- Fig. 10: eine Anordnung, bei welcher eine Schraube und eine Mutter zwei Schrankgehäuse miteinander verbinden, wobei eine Schraube verwendet ist, deren Kopfdurchmesser kleiner als der der Mutter ist, so dass jeweils der gleiche Dom eine Mutter oder eine Schraube aufnehmen kann,
- Fig. 11: das Zerbrechen des isolierenden Deckels längs der Sollbruchstelle in einer ersten Ansicht,
- Fig. 12: das Zerbrechen des Deckels gemäß Fig. 11 längs der Sollbruchstelle in einer weiteren Ansicht, und
- Fig. 13: den abgebrochenen isolierenden Deckel als Reststück, welches nach erfolgter Kupferschienen- oder Leitungsverbindung den Berührungsschutz zwischen Einbaufeldern und isolierender Innenauskleidung gewährleistet.

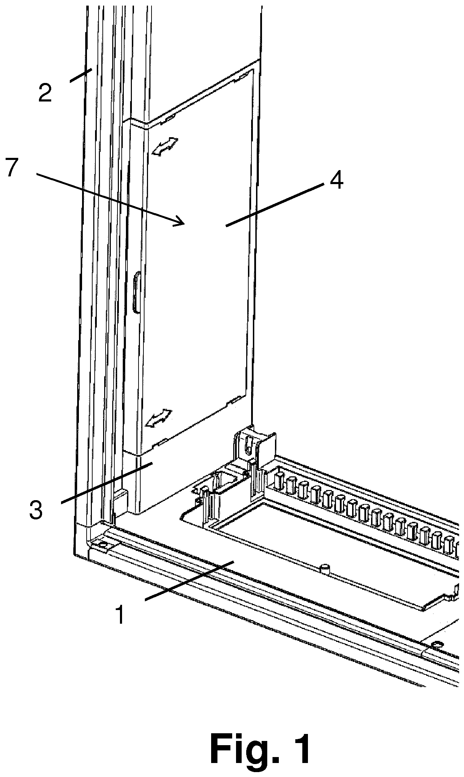

Fig. 1 zeigt einen Schrank, umfassend ein Schrankgehäuse 1 mit mindestens einer Seitenwand 2, in welche eine Wandöffnung 7 zur Durchführung von Stromschienen oder Leitungen eingebracht ist, wobei die Wandöffnung 7 durch Entfernen eines Wandabschnitts aus der Seitenwand 2 erzeugt ist und wobei der Seitenwand 2 eine elektrisch isolierende Innenauskleidung 3 zugeordnet ist. Die Seitenwand 2 ist vorzugsweise aus Blech gefertigt. Die Innenauskleidung 3 ist an der Innenseite der Seitenwand 2 angebracht.

Die Innenauskleidung 3 weist einen Bereich auf, in dem ein entnehmbarer Auskleidungsabschnitt 4 angeordnet oder ausgebildet ist. Der Auskleidungsabschnitt 4 ist reversibel entnehmbar.

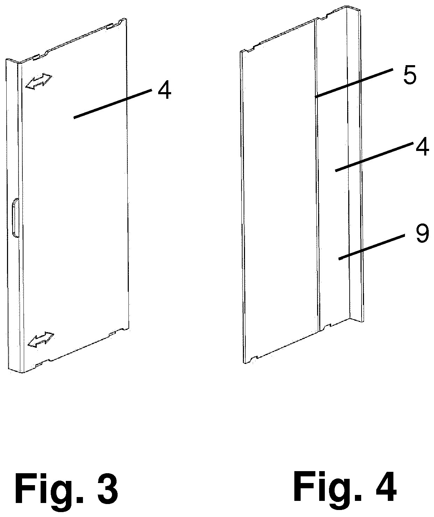

Die Fig. 1 und 3 zeigen, dass der Auskleidungsabschnitt 4 als entnehmbarer und zumindest teilweise wieder einsetzbarer Deckel ausgebildet ist.

Fig. 4 zeigt, dass der Auskleidungsabschnitt 4 eine Sollbruchstelle 5 aufweist, um den Auskleidungsabschnitt 4 in zwei Stücke zu zerbrechen.

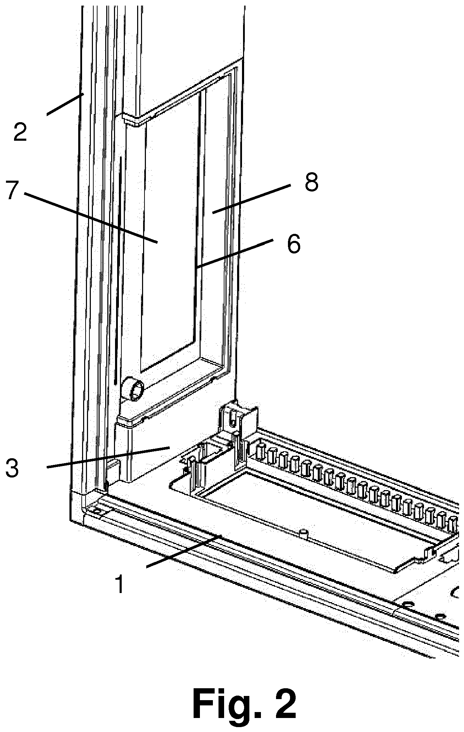

In Fig. 2 ist dargestellt, dass der bereits herausgeschlagene Wandabschnitt in der Seitenwand 2 von Vorprägungen 6 umgeben ist. Die Vorprägungen 6 erleichtern ein Entfernen des Wandabschnitts. Nach dem Entfernen des nicht gezeigten Wandabschnitts ist die dargestellte Wandöffnung 7 geschaffen.

Fig. 2 zeigt auch, dass in der Innenauskleidung 3 ein zum Wandabschnitt bzw. zur Wandöffnung 7 korrespondierender Freiraum 8 ausgebildet ist, welcher durch den Auskleidungsabschnitt 4 verdeckbar ist oder durch Entfernung des Auskleidungsabschnitts 4 freigebbar oder erzeugbar ist.

Fig. 2 zeigt konkret einen Zähler- und/ oder Verteilerschrank ohne Einbaufelder 10 in einer perspektivischen Ansicht schräg von vorn, wobei der als isolierender Deckel ausgestaltete Auskleidungsabschnitt 4 abgezogen ist.

Die Fig. 3 und 4 zeigen den als Deckel ausgestalteten Auskleidungsabschnitt 4 von vorne und von hinten. Durch Abtrennen eines Teils des Auskleidungsabschnitts 4 längs einer Sollbruchstelle 5 entsteht ein Reststück 9, welches wieder eingesetzt werden kann.

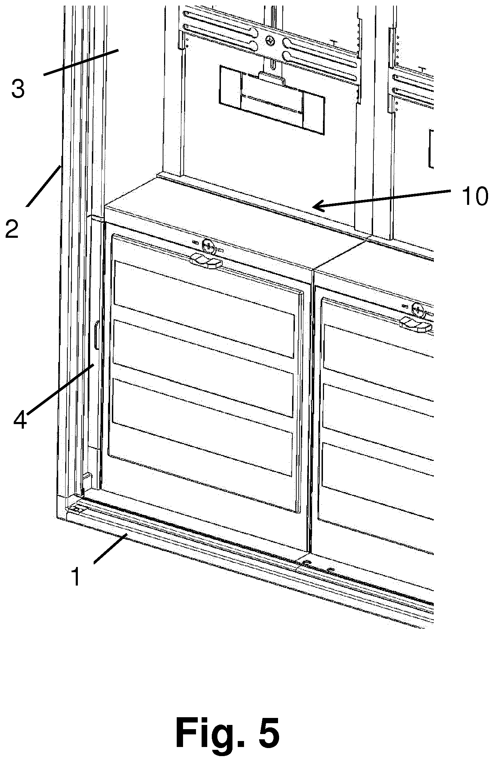

Fig. 5 zeigt einen Zähler- und/ oder Verteilerschrank mit Einbaufeldern 10 und eingebautem isolierendem Deckel in einer perspektivischen Ansicht schräg von vorn.

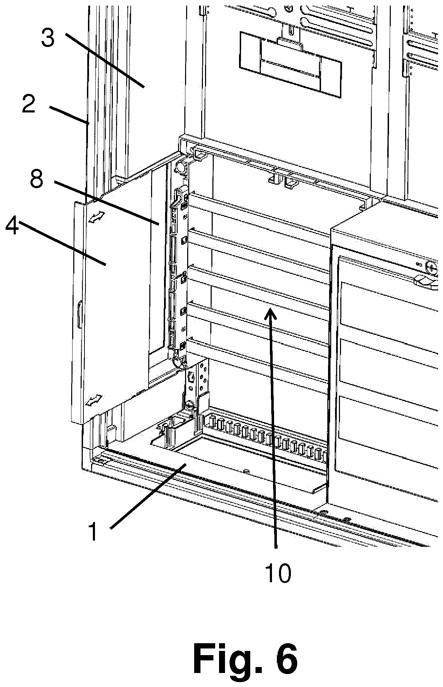

Fig. 6 zeigt einen Zähler- und/ oder Verteilerschrank mit Einbaufeldern 10 und sich im Abziehen befindendem, isolierendem Auskleidungsabschnitt 4, der als Deckel ausgestaltet ist, in einer perspektivischen Ansicht schräg von vorn, wobei dargestellt ist, wie ein Zwischenraum zwischen Einbaufeldern 10 und seitlicher isolierender Innenauskleidung 3 durch das Entfernen des isolierenden Deckels größer wird.

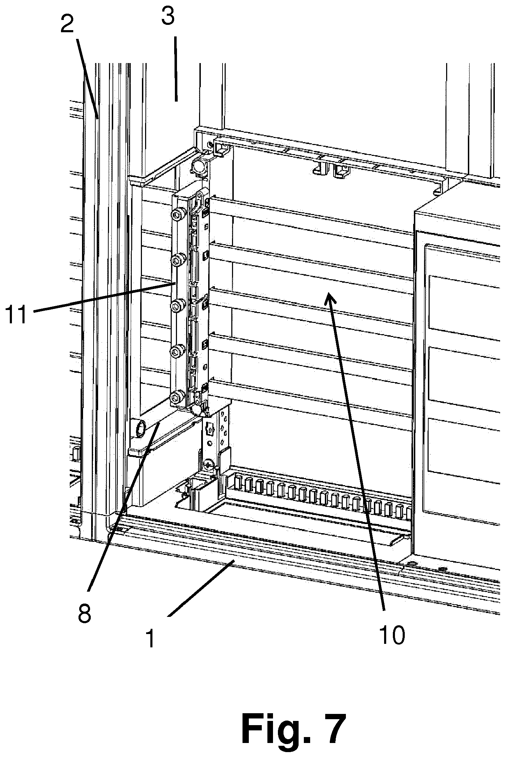

Fig. 7 zeigt einen Zähler- und/ oder Verteilerschrank mit Einbaufeldern 10 und eingebautem Sammelschienenverbinder 11 in einer perspektivischen Ansicht schräg von vorn, wobei der entfernte Deckel einen frei zugänglichen Raum schafft, um den Sammelschienenverbinder 11 einsetzen und anschließen zu können.

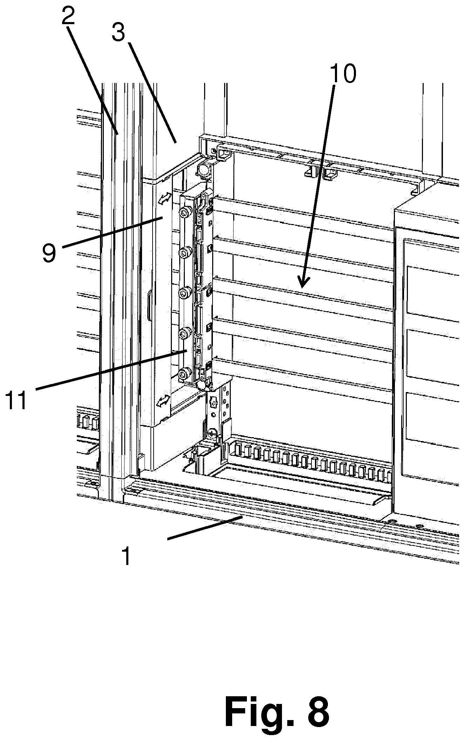

Fig. 8 zeigt einen Zähler- und/ oder Verteilerschrank mit Einbaufeldern 10 und eingebautem Sammelschienenverbinder 11. Der isolierende Deckel wurde an seiner Sollbruchstelle 5 in zwei Stücke getrennt, wobei ein Reststück 9 wieder eingebaut ist. Das Reststück 9 dient als Berührungsschutz zwischen den Einbaufeldern 10 und der isolierenden Innenauskleidung 3.

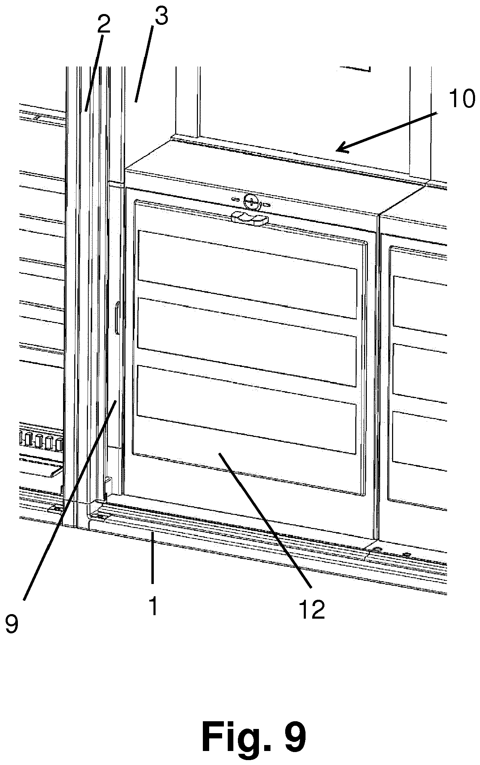

Fig. 9 zeigt den Zähler- und/ oder Verteilerschrank mit Einbaufeldern 10 und eingebautem Sammelschienenverbinder 11, wobei der isolierende Deckel an seiner Sollbruchstelle 5 in zwei Stücke getrennt und wieder eingebaut wurde. Das Reststück 9 stellt den Berührungsschutz zwischen den Einbaufeldern 10 und der isolierenden Innenauskleidung 3 wieder her. Eine Feldabdeckung 12 ist eingebaut.

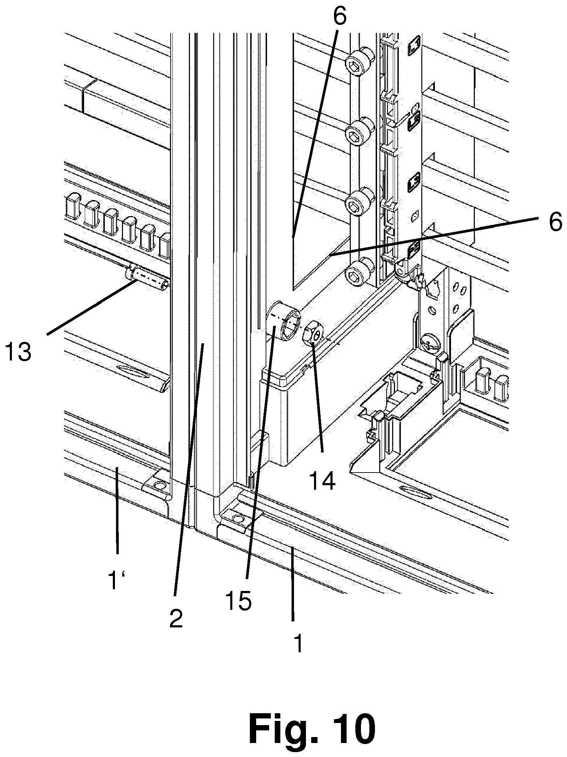

Fig. 10 zeigt eine Anordnung, bei der eine Schraube 13 und eine Mutter 14 zwei Schrankgehäuse 1,1' miteinander verbinden. Der Seitenwand 2 ist ein Dom 15 zugeordnet, welcher durch den hier nicht dargestellten Auskleidungsabschnitt 4 verdeckbar ist. Es wird eine Schraube 13 verwendet, deren Kopfdurchmesser kleiner als der der Mutter 14 ist. So kann jeweils der gleiche Dom 15 eine Mutter 14 oder eine Schraube 13 aufnehmen.

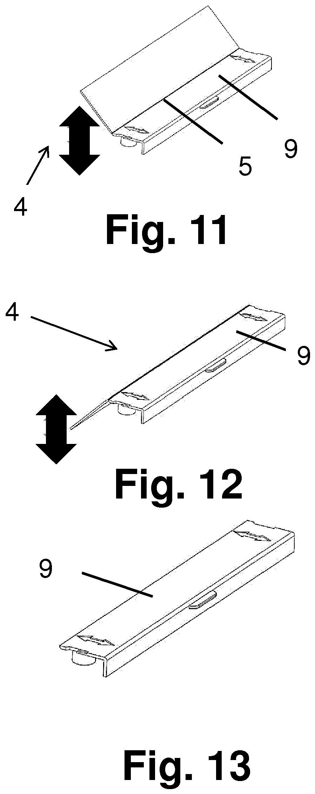

Die Fig. 11 und 12 zeigen, wie ein Teil des Auskleidungsabschnitts 4, welches als Deckel ausgebildet ist, längs der Sollbruchstelle 5 abgebrochen wird. Die Pfeile geben die Bewegungsrichtungen an, in die das Teil relativ zum Reststück 9 hin- und herbewegt wird.

Fig. 13 zeigt das erhaltene Reststück 9, welches wieder einsetzbar ist.

### Bezugszeichenliste

- 1: Schrankgehäuse
- 2: Seitenwand
- 3: Innenauskleidung
- 4: Auskleidungsabschnitt
- 5: Sollbruchstelle
- 6: Vorprägung
- 7: Wandöffnung
- 8: Freiraum
- 9: Reststück
- 10: Einbaufelder
- 11: Sammelschienenverbinder
- 12: Feldabdeckung
- 13: Schraube
- 14: Mutter
- 15: Dom

## Patentansprüche

1. Schrank, umfassend ein Schrankgehäuse (1) mit mindestens einer Seitenwand (2), in welche eine Wandöffnung (7) zur Durchführung von Stromschienen oder Leitungen einbringbar oder eingebracht ist, wobei die Wandöffnung (7) durch Entfernen eines Wandabschnitts aus der Seitenwand (2) erzeugbar oder erzeugt ist und wobei der Seitenwand (2) eine elektrisch isolierende Innenauskleidung (3) zugeordnet ist, wobei die Innenauskleidung (3) einen Bereich aufweist, in dem ein entnehmbarer Auskleidungsabschnitt (4) angeordnet oder ausgebildet ist, **dadurch gekennzeichnet, dass** der Auskleidungsabschnitt (4) reversibel entnehmbar ist und dass in der Innenauskleidung (3) ein zum Wandabschnitt oder zur Wandöffnung (7) korrespondierender Freiraum (8) ausgebildet ist, welcher durch den Auskleidungsabschnitt (4) verdeckbar ist oder durch Entfernung des Auskleidungsabschnitts (4) freigebbar oder erzeugbar ist.

2. Schrank nach Anspruch 1, **dadurch gekennzeichnet, dass** der Auskleidungsabschnitt (4) als entnehmbarer und zumindest teilweise wieder einsetzbarer Deckel ausgebildet ist.

3. Schrank nach einem der voranstehenden Ansprüche, **dadurch gekennzeichnet, dass** der Auskleidungsabschnitt (4) eine Sollbruchstelle (5) aufweist.

4. Schrank nach einem der voranstehenden Ansprüche, **dadurch gekennzeichnet, dass** der Wandabschnitt in der Seitenwand (2) von Vorprägungen (6) umgeben ist oder vorgeprägt ist.

5. Schrank nach einem der voranstehenden Ansprüche, **dadurch gekennzeichnet, dass** der Seitenwand (2) ein Dom (15) oder ein anderes Formschlussmittel zugeordnet ist, welcher bzw. welches durch den Auskleidungsabschnitt (4) verdeckt oder verdeckbar ist.

## Claims

1. Cabinet, comprising a cabinet housing (1) with at least one side wall (2) in which a wall opening (7) for the leadthrough of busbars or lines can be incorporated or is incorporated, wherein the wall opening (7) can be created or is created by removing a wall portion from the side wall (2) and wherein an electrically insulating interior lining (3) is assigned to the side wall (2), wherein the interior lining (3) has a region in which a removable lining portion (4) is arranged or formed, **characterized in that** the lining portion (4) can be removed reversibly and **in that** a free space (8) corresponding to the wall portion or to the wall opening (7) is formed in the interior lining (3) and can be covered by the lining portion (4) or can be cleared or created by removing the lining portion (4).

2. Cabinet according to Claim 1, **characterized in that** the lining portion (4) is formed as a removable and at least partially reinsertable cover.

3. Cabinet according to either of the preceding claims, **characterized in that** the lining portion (4) has a predetermined breaking point (5).

4. Cabinet according to one of the preceding claims, **characterized in that** the wall portion in the side wall (2) is surrounded by pre-embossments (6) or is pre-embossed.

5. Cabinet according to one of the preceding claims, **characterized in that** a dome (15) or another form-fit means is assigned to the side wall (2) and is covered or can be covered by the lining portion (4).

## Revendications

1. Armoire, comprenant un boîtier d'armoire (1) avec au moins une paroi latérale (2) dans laquelle est ou peut être réalisée une ouverture de paroi (7) pour le passage de barres conductrices ou de conduites, l'ouverture de paroi (7) étant ou pouvant être produite par enlèvement d'une portion de paroi hors de la paroi latérale (2) et la paroi latérale (2) étant associée à un habillage intérieur électriquement isolant (3), l'habillage intérieur (3) présentant une région dans laquelle est disposée ou réalisée une portion d'habillage amovible (4), **caractérisée en ce que** la portion d'habillage (4) peut être enlevée de manière réversible et **en ce que** dans l'habillage intérieur (3) est réalisé un espace libre (8) correspondant à la portion de paroi ou à l'ouverture de paroi (7), lequel espace libre peut être couvert par la portion d'habillage (4) ou peut être libéré ou créé en enlevant la portion d'habillage (4).

2. Armoire selon la revendication 1, **caractérisée en ce que** la portion d'habillage (4) est réalisée sous forme de couvercle amovible et pouvant être au moins en partie réinséré.

3. Armoire selon l'une quelconque des revendications précédentes, **caractérisée en ce que** la portion d'habillage (4) présente une zone destinée à la rupture (5).

4. Armoire selon l'une quelconque des revendications précédentes, **caractérisée en ce que** la portion de paroi dans la paroi latérale (2) est entourée de prégravures (6) ou est prégravée.

5. Armoire selon l'une quelconque des revendications précédentes, **caractérisée en ce que** la paroi latérale (2) est associée à un mandrin (15) ou à un autre moyen d'engagement par correspondance de forme qui est ou peut être recouvert par la portion d'habillage (4).
